Europäisches Patentamt

European Patent Office

Office européen des brevets

(19)

(11) Veröffentlichungsnummer: **0 221 268**
**B1**

## (12) EUROPÄISCHE PATENTSCHRIFT

(45) Veröffentlichungstag der Patentschrift:
18.07.90

(21) Anmeldenummer: 86111616.8

(22) Anmeldetag: 22.08.86

(51) Int. Cl.⁵: **F02M 35/04, F02M 69/00**

(54) Anordnung mit einem Luftmassenmesser für eine Brennkraftmaschine.

(30) Priorität: 02.11.85 DE 3539016

(43) Veröffentlichungstag der Anmeldung:
13.05.87 Patentblatt 87/20

(45) Bekanntmachung des Hinweises auf die Patenterteilung:
18.07.90 Patentblatt 90/29

(84) Benannte Vertragsstaaten:
DE FR GB SE

(56) Entgegenhaltungen:
DE-A- 3 011 294
DE-A- 3 338 653
GB-A- 2 044 352

PATENT ABSTRACTS OF JAPAN, Band 6,
Nr. 192 (P-145)[1070], 30. September 1982; &
JP-A-57 103 016 (HITACHI SEISAKUSHO
K.K.) 26-06-1982

(73) Patentinhaber: VDO Adolf Schindling AG,
Gräfstrasse 103, D-6000 Frankfurt/Main 90(DE)

(72) Erfinder: Porth, Wolfgang, Röhrborngasse 70,
D-6000 Frankfurt am Main 60(DE)
Erfinder: Hannewald, Thomas, Feldmannstrasse 6,
D-6103 Griesheim(DE)
Erfinder: Weingärtner, Reiner,
Wilhelm-Leuschner-Strasse 9, D-6230 Hofheim a. T.(DE)
Erfinder: Weigler, Wolfgang, Dr., Vorderheide 14,
D-6238 Hofheim a. T.(DE)
Erfinder: Kern, Eckhart, Hofheimer Strasse 35,
D-6238 Hofheim 7(DE)

(74) Vertreter: Klein, Thomas, Dipl.-Ing. (FH), Sodener
Strasse 9 Postfach 6140, D-6231 Schwalbach a. Ts.(DE)

ACTORUM AG

## Beschreibung

Die Erfindung betrifft eine Anordnung mit einem Luftmassenmesser für eine Brennkraftmaschine, wobei die einen Sensor aufweisende Meßstelle des Luftmassenmessers in einem Meßrohr angeordnet ist, welches eine Trennwand durchdringt, die den Innenraum eines Luftfilters von einem Pulsations-Dämpfungsraum trennt, wobei der Pulsations-Dämpfungsraum von einem Gehäuse umschlossen ist, auf welches der Luftfilter aufsetzbar ist, und wobei an dem der Trennwand gegenüberliegenden Wand des Gehäuses ein zur Brennkraftmaschine führendes Rohr angeschlossen ist.

Bei der Regelung von Brennkraftmaschinen mit Kraftstoffeinspritzung ist die Messung der vom Motor angesaugten Luftmasse erforderlich. Hierzu sind mechanische Systeme bekannt, welche beispielsweise mit in den Luftstrom hineinragenden beweglichen Klappen oder Stauscheiben arbeiten. Außerdem sind zur Luftmassenmessung Sensoren bekannt geworden, zum Beispiel Hitzdraht-Luftmassenmesser. Diese haben den Vorteil, daß sie keine bewegten Teile aufweisen und gegenüber den mechanischen Systemen einen geringen Eingriff in die Luftströmung zur Folge haben. Außerdem ist das Meßergebnis unabhängig von Höhenunterschieden, was bei den mechanischen Systemen, welche primär die Luftmenge messen, nicht der Fall ist.

Bei der Anordnung der Luftmassen- bzw. Luftmengenmesser wurden verschiedene Wege beschritten. So ist es beispielsweise bekannt geworden, einen mit Ultraschall arbeitenden Luftmassenmesser im Inneren eines Luftfilters anzuordnen. Dabei ist die Meßstelle des Luftmassenmessers innerhalb eines Meßrohres derart angeordnet, daß das Meßrohr im Bereich der Meßstelle von der im Innenraum des Luftfilters strömenden Luft außen umspült wird. Damit ist gewährleistet, daß das Meßrohr weitgehend die Temperatur der angesaugten Luft annimmt, was wiederum für die Funktion des mit Ultraschall arbeitenden Luftmassenmessers wesentlich ist. Die bekannte, auf einem mit Ultraschall arbeitenden Luftmassenmesser abgestimmte Konstruktion, hat jedoch konstruktive Nachteile und gewährleistet beispielsweise nicht eine ausreichende Dämpfung von Pulsationen der Luft bzw. des Luft-Kraftstoff-Gemischs innerhalb des Ansaugkanals.

Die GB-A 2 044 352 zeigt eine Anordnung mit einem Luftmengenmesser für eine Brennkraftmaschine, wobei die Meßstelle des Luftmengenmessers in einem Meßrohr angeordnet ist, welches eine Trennwand durchdringt, die den Innenraum eines Luftfilters von einem Pulsations-Dämpfungsraum trennt, wobei der Pulsations-Dämpfungsraum von einem Gehäuse umschlossen ist, auf welches das Luftfilter aufsetzbar ist.

Aufgabe der vorliegenden Erfindung ist es, eine Anordnung mit einem Luftmassenmesser anzugeben, welche den strömungstechnischen Gegebenheiten des Ansaugkanals einer Brennkraftmaschine, insbesondere eines Kraftfahrzeuges, weitgehend Rechnung trägt, preiswert herzustellen ist und zuverlässig arbeitet.

Diese Aufgabe wird erfindungsgemäß dadurch gelöst, daß in dem Pulsations-Dämpfungsraum ein Kraftstoffeinspritzventil angeordnet ist, dessen Düse der Mündung des zur Brennkraftmaschine führenden Rohres gegenübersteht, und daß in der Nähe des Meßrohres auf der Trennwand eine dem Sensor zugeordnete elektrische Schaltung angeordnet ist und die Trennwand und das Luftfilter auf das Gehäuse des Pulsations-Dämpfungsraumes aufsetzbar sind. Gemäß weiterer Ausgestaltungen ragt das Meßrohr etwa zu gleichen Teilen in den Innenraum des Luftfilters und in den Pulsations-Dämpfungsraum und ist die Meßstelle im Bereich der Trennwand angeordnet.

Um zu vermeiden, daß Teile des eingespritzten Kraftstoffnebels nicht direkt in den Ansaugkanal des Motors, sondern zunächst in den Pulsations-Dämpfungsraum gelangen, kann gemäß einer anderen Weiterbildung das zur Brennkraftmaschine führende Rohr trichterförmig in den Pulsations-Dämpfungsraum hineinragen.

Zur besseren Leitung der Luft innerhalb des Pulsations-Dämpfungsraums können im Bereich der Düse Leitelemente angeordnet sein.

Um bewährte und platzsparende Luftfilter anwenden zu können, können gemäß einer anderen Ausgestaltung der Erfindung der Innenraum des Luftfilters und der Pulsations-Dämpfungsraum jeweils die Form eines flachen Zylinders aufweisen.

Andere Weiterbildungen der Erfindung sehen eine strömungstechnisch günstige Gestaltung des Meßrohres vor, nämlich derart, daß mindestens eine Öffnung des Meßrohres kragenförmig ausläuft und/oder daß das Meßrohr in der Nähe der Austrittsöffnung ein Schutzgitter enthält. Auch kann der Durchmesser des Meßrohres zur Verbesserung der Strömung in der Nähe des Sensors an der Meßstelle kleiner als an der Eintrittsöffnung sein.

Wenn die Erfindung auch in erster Linie auf die Verwendung von thermischen Sensoren, beispielsweise Hitzdraht-Sensoren, gerichtet ist, so ist eine vorteilhafte Anwendung anderer Sensoren, beispielsweise Ultraschall-Sensoren, durchaus möglich.

Die erforderliche Kühlung der elektrischen Schaltung kann entweder durch die gefilterte Ansaugluft erfolgen oder dadurch, daß die Trennwand als Kühlkörper dient, wenn gemäß einer weiteren Ausgestaltung der Erfindung die elektrische Schaltung mit der Trennwand in wärmeleitender Verbindung steht.

Schließlich ist es möglich, weitere elektrische Schaltungen, beispielsweise eine die Signale des Luftmassenmessers und möglicherweise anderer Sensoren auswertende Regelschaltung im Innenraum des Luftfilters auf der Trennwand anzuordnen. Hierbei entsteht neben dem Vorteil der Kühlung auch ein weiterer Vorteil, daß nämlich verschiedene Elemente, welche zu einem Regelsystem gehören und somit funktionell zusammenhängen, auch körperlich innerhalb einer Baueinheit angeordnet sind.

Die Erfindung läßt zahlreiche Ausführungsformen zu. Eine davon ist schematisch in der Zeichnung an Hand mehrerer Figuren dargestellt und nachfolgend beschrieben. Es zeigt:

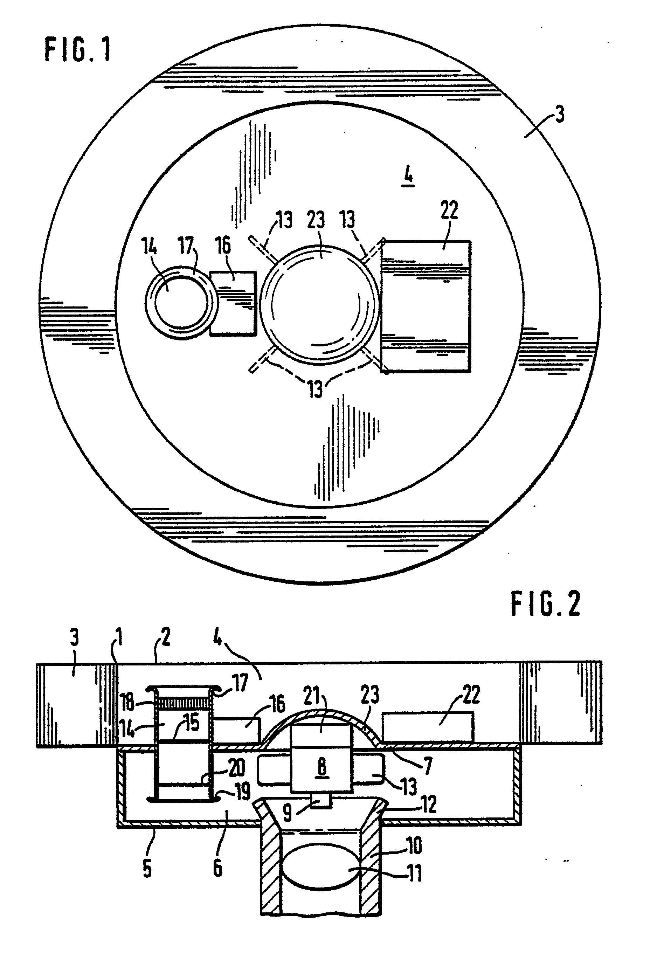

Fig. 1 einen Querschnitt und
Fig. 2 einen Längsschnitt des Ausführungsbeispiels.

Gleiche Teile sind in den Figuren mit gleichen Bezugszeichen versehen.

Das Luftfilter 1 mit einem Gehäuse 2 ist ein an sich bekanntes die Form eines flachen Zylinders aufweisendes Luftfilter, wie es für die weitaus meisten Vergasermotoren verwendet wird. Anstelle eines Rohranschlusses für den Ansaugstutzen ist es jedoch unten offen. Es wird jedoch von einer Trennwand 7, welche den Filterinnenraum 4 von dem darunter liegenden, im folgenden näher beschriebenen Hohlraum 6 trennt, verschlossen. Mit 3 ist in der Figur das eigentliche, lediglich schematisch dargestellte ringförmige Luftfilter bezeichnet.

Das Gehäuse 5, welches das Luftfilter 1 und die Trennwand 7 trägt, ist mit einem Rohr 10 verbunden, welches den Ansaugkanal der nicht dargestellten Brennkraftmaschine bildet. In dem Rohr 10 ist die Drosselklappe 11 angeordnet. Ein oberhalb der Eintrittsöffnung des Rohres 10 angeordnetes Einspritzventil 8 spritzt den Kraftstoff in die Luft, welche unmittelbar in das Rohr 10 eintritt. Damit ein Teil der von der Düse 9 versprühten Kraftstoffteilchen nicht in Bereiche der Luft gelangen, welche nicht direkt in das Rohr 10 strömt, kann eine trichterförmige Erweiterung 12 des Rohres 10 vorgesehen sein. Leitelemente 13 tragen dazu bei, die Strömung im Raum vor der Düse 9 zu beruhigen.

Der Übersichtlichkeit halber ist eine Halterung des Einspritzventils innerhalb des Gehäuses 5 nicht dargestellt. Der Entwurf einer solchen Halterung liegt jedoch im Bereich des Fachmännischen.

Das Einspritzventil 8 kann mit einem Systemdruckregler 21, welcher als solcher bekannt ist, zu einer konstruktiven Einheit zusammengefaßt sein. Leitungen für die Kraftstoffzu- und Rückführung sind vorgesehen, jedoch nicht dargestellt.

Der Hohlraum 6 des Gehäuses 5 bildet einen Pulsations-Dämpfungsraum. Bekanntlich erfolgt das Ansaugen bei mit Kolben arbeitenden Brennkraftmaschinen pulsierend. Diese Pulsation macht sich im gesamten Ansaugsystem bemerkbar. Für eine exakte Messung der Luftmassen ist jedoch eine gleichmäßige Strömung im Luftmassenmesser erforderlich; die Pulsation verfälscht somit das Meßergebnis.

Das den Sensor 15 beinhaltende Meßrohr 14 wird in der Trennwand derart gehalten, daß es etwa zu gleichen Teilen in den Hohlraum 6 und in den Innenraum 4 des Luftfilters 1 hineinragt. Zur Erreichung eines möglichst geringen Strömungswiderstandes und zur Ausbildung eines definierten Strömungsverlaufs innerhalb des Meßrohres 14 sind die Eintrittsöffnung 17 und die Austrittsöffnung 19 kragenartig ausgebildet.

In der Nähe der Austrittsöffnung 19 ist ein Schutzgitter 20 vorgesehen, während an der Eintrittsöffnung 17 ein Strömungsgleichrichter 18 angeordnet ist, welcher in an sich bekannter Weise aus einer Vielzahl von in einen geeigneten Werkstoff eingebrachten Kanälen besteht.

Wie bereits oben erwähnt, können bei der erfindungsgemäßen Anordnung verschiedenartige Sensoren verwendet werden. Eine bevorzugte Ausführung des Sensors 15 besteht in einem thermischen Sensor, bei welchem ein im Meßrohr gespannter Draht oder ein auf einem Isolierstoffplättchen aufgebrachte Leiter von einem Strom durchflossen wird, so daß sie sich deutlich über die Temperatur der vorbeiströmenden Luft hinaus erwärmt. Über den temperaturabhängigen Widerstand kann in einer elektrischen Schaltung 16 die Temperatur des Leiters auf einen konstanten Wert geregelt werden, wobei je nach vorbeiströmender Luftmasse ein höherer oder niedrigerer Strom durch den Leiter fließt. Zur Kompensation des Einflusses der Lufttemperatur kann in der Nähe des elektrisch beheizten Meßleiters ein Vergleichsleiter angeordnet sein, welcher von einem geringen Strom durchflossen ist, so daß seine Temperatur praktisch der Temperatur der Luft entspricht.

Wegen der elektrischen Verbindungen des Sensors 15 mit der zugehörigen elektrischen Schaltung 16 ist diese in unmittelbarer Nähe des Sensors 15 bzw. des Meßrohres 14 angeordnet. Dabei hat es sich als besonders günstig herausgestellt, die elektrische Schaltung 16 im Innenraum des Luftfilters vorzusehen und an der Trennwand 7 zu befestigen. Dabei dient die durch das Filter 3 angesaugte Luft der Kühlung der elektrischen Schaltung 16, wobei bei gutem Wärmekontakt zwischen der Schaltung 16 und der Trennwand 7 die wirksame Kühlfläche, welche in der Lage ist, Wärme an die Luft abzugeben, erheblich vergrößert wird.

Außer der elektrischen Schaltung 16 kann im Innenraum 4 des Luftfilters 1 eine weitere mit der Schaltung 16 in Verbindung stehende Schaltung 22 angeordnet sein. Die Schaltung 22 enthält die an sich bekannte zur elektronischen Einspritzregelung erforderlichen Schaltungen. Durch die Anordnung der weiteren Schaltung 22 in diesem Bereich auf der Trennwand 7 wird neben einer guten Kühlung auch erreicht, daß sich die Leitungsführung zwischen der Schaltung 16 und der Schaltung 22 sowie dem Einspritzventil 8 erheblich vereinfacht. Ferner ist es für Wartungsarbeiten günstig, daß die genannten drei Komponenten des Einspritzregelsystems innerhalb einer Baugruppe angeordnet sind. Die Trennwand 7 kann im Bereich des Kraftstoffeinspritzventiles 8 eine in den Innenraum des Luftfilters hineinragende Ausbuchtung 23 aufweisen.

Die Erfindung ist nicht auf das dargestellte Ausführungsbeispiel beschränkt, sondern umfaßt weitere vorteilhafte Ausgestaltungen. So kann beispielsweise das Meßrohr 14 schräg gestellt werden, wodurch bei gleichen Abmessungen der gesamten Anordnung ein längerer Meßweg ermöglicht wird. Auch eine Ausbildung des Meßrohres 14 als Venturi-Düse mit der Meßstelle im engsten Querschnitt ist möglich. Beide Maßnahmen tragen zur Verbesserung der Strömungsverhältnisse bei, die dann bei den unterschiedlichen Betriebsbedingungen und gleichem Massenstrom weitgehend gleich sind.

## Patentansprüche

1. Anordnung mit einem Luftmassenmesser für eine Brennkraftmaschine, wobei die einen Sensor aufweisende Meßstelle des Luftmassenmessers in einem Meßrohr (14) angeordnet ist, welches eine Trennwand (7) durchdringt, die den Innenraum (4) eines Luftfilters (1) von einem Pulsations-Dämpfungsraum (6) trennt, wobei der Pulsations-Dämpfungsraum (6) von einem Gehäuse (5) umschlossen ist, auf welches daqs Luftfilter (1) aufsetzbar ist, und wobei an der der Trennwand (7) gegenüberliegenden Wand des Gehäuses (5) ein zur Brennkraftmaschine führendes Rohr (10) angeschlossen ist, dadurch gekennzeichnet, daß in dem Pulsations-Dämpfungsraum (6) ein Kraftstoffeinspritzventil (8) angeordnet ist, dessen Düse (9) der Mündung des zur Brennkraftmaschine führenden Rohres (10) gegenübersteht, und daß in der Nähe des Meßrohres (14) auf der Trennwand (7) eine den Sensor zugeordnete elektrische Schaltung (16) angeordnet ist und die Trennwand (7) und das Luftfilter auf das Gehäuse des Pulsations-Dämpfungsraumes aufsetzbar sind.

2. Anordnung nach Anspruch 1, dadurch gekennzeichnet, daß das Meßrohr (14) etwa zu gleichen Teilen in den Innenraum (4) des Luftfilters (1) und in den Pulsations-Dämpfungsraum (6) ragt.

3. Anordnung nach Anspruch 1, dadurch gekennzeichnet, daß die Meßstelle (15) im Bereich der Trennwand (7) angeordnet ist.

4. Anordnung nach Anspruch 1, dadurch gekennzeichnet, daß das Rohr (10) trichterförmig in den Pulsations-Dämpfungsraum (6) hineinragt.

5. Anordnung nach Anspruch 4, dadurch gekennzeichnet, daß die Trennwand (7) im Bereich des Kraftstoffeinspritzventils (8) eine in den Innenraum des Luftfilters hineinragende Ausbuchtung (23) aufweist.

6. Anordnung nach Anspruch 1, dadurch gekennzeichnet, daß im Bereich der Düse (9) Leitelemente (13) angeordnet sind.

7. Anordnung nach Anspruch 1, dadurch gekennzeichnet, daß der Innenraum (4) des Luftfilters (1) und der Pulsations-Dämpfungsraum (6) jeweils die Form eines flachen Zylinders aufweisen.

8. Anordnung nach Anspruch 7, dadurch gekennzeichnet, daß das Meßrohr (14) und/oder das Kraftstoffeinspritzventil (8) asymmetrisch angeordnet sind.

9. Anordnung nach Anspruch 1, dadurch gekennzeichnet, daß mindestens eine Öffnung (17, 19) des Meßrohres kragenförmig ausläuft.

10. Anordnung nach Anspruch 1, dadurch gekennzeichnet, daß das Meßrohr (14) in der Nähe der Austrittsöffnung (19) ein Schutzgitter (20) enthält.

11. Anordnung nach Anspruch 1, dadurch gekennzeichnet, daß das Meßrohr (14) als Venturi-Düse ausgebildet ist, in deren engstem Querschnitt die Meßstelle (15) vorgesehen ist.

12. Anordnung nach Anspruch 1, dadurch gekennzeichnet, daß die elektrische Schaltung (16) mit der Trennwand (7) in wärmeleitender Verbindung steht.

13. Anordnung nach Anspruch 1, dadurch gekennzeichnet, daß auf der Trennwand (7) weitere elektrische Schaltungen (22) angeordnet sind.

14. Anordnung nach Anspruch 1, dadurch gekennzeichnet, daß das Meßrohr (14) gegen die Mittelachse des Luftfilters geneigt ist.

## Claims

1. Arrangement with an air-mass meter for an internal-combustion engine, in which the air-mass meter measuring point having a sensor is arranged in a measuring tube (14) passing through a partition wall (7) which separates the interior (4) of an air filter (1) from a pulsation damping space (6), the pulsation damping space (6) being surrounded by a housing (5) on which the air filter (1) can be placed, and a pipe (10) leading to the internal-combustion engine being connected to that wall of the housing (5) located opposite the partition wall (7), characterized in that arranged in the pulsation damping space (6) is a fuel-injection valve (8), the nozzle (9) of which is opposite the mouth of the pipe (10) leading to the internal-combustion engine, and in that an electrical circuit (16) assigned to the sensor is arranged on the partition wall (7) in the vicinity of the measuring tube (14), and the partition wall (7) and air filter can be placed on the housing of the pulsation damping space.

2. Arrangement according to Claim 1, characterized in that the measuring tube (14) projects with approximately equal parts into the interior (4) of the air filter (1) and into the pulsation damping space (6).

3. Arrangement according to Claim 1, characterized in that the measuring point (15) is arranged in the region of the partition wall (7).

4. Arrangement according to Claim 1, characterized in that the pipe (10) projects into the pulsation damping space (6) in a funnel-shaped manner.

5. Arrangement according to Claim 4, characterized in that, in the region of the fuel-injection valve (8), the partition wall (7) has a bulge (23) protruding into the interior of the air filter.

6. Arrangement according to Claim 1, characterized in that guide elements (13) are arranged in the region of the nozzle (9).

7. Arrangement according to Claim 1, characterized in that the interior (4) of the air filter (1) and the pulsation damping space (6) each have the form of a flat cylinder.

8. Arrangement according to Claim 7, characterized in that the measuring tube (14) and/or the fuel-injection valve (8) are arranged asymmetrically.

9. Arrangement according to Claim 1, characterized in that at least one orifice (17, 19) of the measuring tube terminates in the form of a collar.

10. Arrangement according to Claim 1, characterized in that the measuring tube (14) contains a protective grid (20) in the vicinity of the outflow orifice (19).

11. Arrangement according to Claim 1, characterized in that the measuring tube (14) is designed as a Venturi tube, in the narrowest cross-section of which the measuring point (15) is provided.

12. Arrangement according to Claim 1, characterized in that the electrical circuit (16) is connected to the partition wall (7) in a thermally conductive manner.

13. Arrangement according to Claim 1, characterized in that further electrical circuits (22) are arranged on the partition wall (7).

14. Arrangement according to Claim 1, characterized in that the measuring tube (14) is inclined relative to the mid-axis of the air filter.

## Revendications

1. Montage ou système pour dispositif de mesure des masses d'air pour moteur à combustion interne, le poste de mesure de ce dispositif, qui comporte un détecteur, étant logé dans un tube (14) de mesure traversant une cloison (7) qui sépare l'espace intérieur (4) d'un filtre (3) à air d'une enceinte (6) d'amortissement des pulsations, cette chambre (6) étant entourée par un boîtier (5) sur lequel le filtre (1) peut être posé, et un tube (10), qui va au moteur, étant relié à la paroi de ce boîtier (5) qui est opposée à la cloison (7), montage caractérisé en ce que l'enceinte (6) d'amortissement des pulsations contient un injecteur (8) de carburant, dont la buse (9) est en face de l'embouchure du tube (10) menant au moteur, et en ce qu'un circuit électrique (16), coopérant avec le détecteur, est disposé sur la cloison (7) à proximité du tube (14) de mesure, cette cloison (7) et le filtre pouvant être montés sur le boîtier de l'enceinte d'amortissement des pulsations.

2. Montage selon la revendication 1, caractérisé en ce que le tube (14) de mesure pénètre en parties sensiblement égales dans l'espace intérieur (4) du filtre (1) à air et dans l'enceinte (6) d'amortissement des pulsations.

3. Montage selon la revendication 1, caractérisé en ce que le poste (15) de mesure est disposé près de la cloison (7).

4. Montage selon la revendication 1, caractérisé en ce que le tube (10) est évasé en entonnoir à l'intérieur de l'enceinte (6) d'amortissement des pulsations.

5. Montage selon la revendication 4, caractérisé en ce que la cloison (7) comporte, près de l'injecteur (8), un renflement (23) rentrant à l'intérieur du filtre à air.

6. Montage selon la revendication 1, caractérisé en ce que des éléments déflecteurs (13) sont disposés près de la buse (9).

7. Montage selon la revendication 1, caractérisé en ce que l'espace intérieur (4) du filtre (1) à air et l'enceinte (6) d'amortissement des pulsations ont la configuration de cylindres courts ou "plats".

8. Montage selon la revendication 7, caractérisé en ce que le tube (14) de mesure et/ou l'injecteur (8) de carburant sont disposés asymétriquement.

9. Montage selon la revendication 1, caractérisé en ce qu'un orifice (17, 19) au moins du tube de mesure est élargi en forme de collerette.

10. Montage selon la revendication 1, caractérisé en ce que le tube (14) de mesure contient, près de son orifice de sortie (19), une grille de protection (20).

11. Montage selon la revendication 1, caractérisé en ce que le tube (14) de mesure a la configuration d'un tube de Venturi, dans la partie la plus étroite duquel le poste (15) de mesure est disposé.

12. Montage selon la revendication 1, caractérisé en ce que le circuit électrique (16) est en liaison d'échange de chaleur avec la cloison (7).

13. Montage selon la revendication 1, caractérisé en ce que d'autres circuits électriques (22) sont disposés sur la cloison (7).

14. Montage selon la revendication 1, caractérisé en ce que le tube (14) de mesure est incliné sur l'axe du filtre à air.

EP 0 221 268 B1

FIG.1

3

4

13  23  13  22

14  17  16

13

FIG.2

3  1  2  4

18  17
14  15  16  21  23  22
20  7
19  8  13
9  12
5  6  10  11